# EUROPÄISCHE PATENTSCHRIFT

(11) **EP 3 198 182 B1**
(45) Veröffentlichungstag und Bekanntmachung des Hinweises auf die Patenterteilung: **10.04.2019**
(21) Anmeldenummer: 15801181.7
(22) Anmeldetag: 27.11.2015
(51) Int. Cl.: F16L 37/084

(54) **ANSCHLUSSVORRICHTUNG FÜR EINE FLUIDLEITUNG**
CONNECTION DEVICE FOR A FLUID PIPE
DISPOSITIF DE RACCORD D'UNE CONDUITE DE FLUIDE

(30) Priorität: 09.12.2014 DE 102014225280
(43) Veröffentlichungstag der Anmeldung: 02.08.2017
(73) Patentinhaber: Festo AG & Co. KG, 73734 Esslingen (DE)
(72) Erfinder: WEISS, Martin, 73035 Göppingen (DE)
(74) Vertreter: Patentanwälte Magenbauer & Kollegen Partnerschaft mbB
(86) Internationale Anmeldenummer: PCT/EP2015/077895
(87) Internationale Veröffentlichungsnummer: WO 2016/091615

(56) Entgegenhaltungen:
- EP-A1- 1 209 404
- EP-A1- 1 655 529
- DE-A1- 19 803 918
- DE-A1-102012 021 683

## Beschreibung

Die Erfindung betrifft eine Anschlussvorrichtung für eine Fluidleitung, mit einer Haltemanschette, die ausgebildet ist, um in einer Gebrauchsstellung mit ihrer Vorderseite voraus in eine Befestigungsöffnung eines gesonderten Trägerbauteils einzugreifen und in dieser Befestigungsöffnung befestigt zu sein, und die axial von einer Einstecköffnung durchsetzt ist, in die eine anzuschließende Fluidleitung von der Rückseite der Haltemanschette her einsteckbar ist, wobei die Haltemanschette über ein ringförmig strukturiertes Halteelement verfügt, das rückseitig einen die Einstecköffnung umschließenden ringförmigen Kopfabschnitt aufweist, von dem mehrere mit gegenseitigem Abstand um die Einstecköffnung herum verteilte Haltearme axial nach vorne wegragen, die bezüglich des Kopfabschnittes radial federelastisch verformbar sind und die jeweils mit einem schräg nach vorne und zugleich nach radial innen ragenden Krallenabschnitt enden, der ausgebildet ist, um mit seiner Vorderkante den Außenumfang der eingesteckten Fluidleitung zum Zwecke ihres Festhaltens zu beaufschlagen, wobei jeder Krallenabschnitt mit seiner der Vorderkante entgegengesetzten Rückseite an einem mit dem Kopfabschnitt verbundenen Tragabschnitt des zugeordneten Haltearmes angeordnet ist.

Eine aus der DE 10 2012 021 683 A1 bekannte Anschlussvorrichtung dieser Art ist mit einer Haltemanschette ausgestattet, die sich aus einem aus Elastomermaterial bestehenden Hüllkörper und einem in den Hüllkörper eingebetteten einstückigen Halteelement zusammensetzt, wobei das Halteelement über einen ringförmigen Kopfabschnitt und von dem Kopfabschnitt nach vorne ragende, radial biegbare Haltearme verfügt. Jeder Haltearm endet an seiner dem Kopfabschnitt entgegengesetzten Vorderseite mit einem schräg ausgerichteten Krallenabschnitt, der eine freie Vorderkante aufweist. Die Haltemanschette ist in einer Befestigungsöffnung eines Trägerbauteils fixiert und dazu in der Lage, mit den Vorderkanten der Krallenabschnitte eine in die Haltemanschette eingesteckte Fluidleitung am Außenumfang zu beaufschlagen und dadurch festzuhalten. Zur Fixierung in der Befestigungsöffnung ist die Haltemanschette am Außenumfang mit einer Ringnut versehen, in die ein am Innenumfang der Befestigungsöffnung ausgebildeter ringförmiger Radialvorsprung eingreift. Die Haltearme sind so gebogen, dass auch sie den Radialvorsprung axial innen hintergreifen, damit die Haltemanschette sicher festgehalten wird. Wie sich jedoch herausgestellt hat, ist es vor allem bei kleinen Baugrößen der Haltemanschette technologisch sehr schwierig, die zur Realisierung der Ringnut und der gebogenen Struktur der Haltearme erforderlichen Maßnahmen durchzuführen. Auch die Ausbildung des Ringvorsprunges am Innenumfang der Befestigungsöffnung bereitet bei kleinen Durchmessern Entformungsprobleme, wenn das Trägerbauteil mittels eines kostengünstigen Gießverfahrens hergestellt werden soll.

Aus der EP 0 702 184 A1 ist eine Anschlussvorrichtung bekannt, die über ein ringförmiges Halteelement verfügt, das einen flachen Ringabschnitt aufweist, an dessen Innenumfang mehrere Halteklauen und an dessen Außenumfang mehrere abstehende Zähne angeformt sind. Die Halteklauen dienen zum Festhalten eines eingesteckten Schlauches. Die am Außenumfang abstehenden Zähne sind ausgebildet, um sich in der zylindrischen Innenoberfläche eines hülsenförmigen Trägerbauteils zu verhaken, um einem Herausziehen des Halteelementes entgegenzuwirken.

Die DE 69012235 T2 beschreibt eine Abdichtanordnung zur Abdichtung zweier ineinander eingesteckter Rohre. Die Abdichtanordnung umfasst ein ringförmiges Elastomerteil und aus Metall bestehende Verriegelungselemente.

Aus der GB 1 550 624 B ist ein Rohrverbinder bekannt, der ein ringförmiges Halteelement aufweist, das in ein ringförmiges Dichtelement eingebettet ist. Das Halteelement verfügt über Haltezähne, die am Innenumfang aus dem Dichtelement herausragen und dazu dienen, eine eingesteckte Rohrleitung am Außenumfang zwecks ihres Festhaltens zu beaufschlagen.

Die DE 198 03 918 A1 beschreibt eine Anschlussvorrichtung für Rohrleitungen, die ein in einer Aufnahmebohrung eines Gehäuseteils angeordnetes hülsenförmiges Halteelement aufweist, das widerhakenförmig nach innen ragende Klammerelemente zum Festhalten einer eingesteckten Rohrleitung aufweist. An den Klammerelementen können zungenartige Arretierelemente angeordnet sein, die verschwenkt und gegen die Innenumfangsfläche der Aufnahmebohrung gedrückt werden, wenn die eingesteckte Rohrleitung nach außen bewegt wird.

Es ist die Aufgabe der vorliegenden Erfindung, eine Anschlussvorrichtung für eine Fluidleitung zu schaffen, die bei kostengünstigem Aufbau einen sicheren Halt der Haltemanschette in der Befestigungsöffnung eines Trägerbauteils gewährleistet.

Zur Lösung dieser Aufgabe ist in Verbindung mit den eingangs genannten Merkmalen vorgesehen, dass an zumindest einigen der Krallenabschnitte rückseitig mindestens ein nach rückwärts und zugleich nach radial außen ragender Sicherungs-Widerhaken einstückig angeformt ist, der dazu vorgesehen ist, in eine am Innenumfang der Befestigungsöffnung des Trägerbauteils ausgebildete Befestigungsnut einzugreifen und dadurch die Haltemanschette gegen Herausziehen aus der Befestigungsöffnung zu sichern, wobei mindestens ein Krallenabschnitt an seiner Rückseite breiter ist als der sich anschließende vordere Endbereich des Tragabschnittes des Haltearmes und wobei mindestens ein Sicherungs-Widerhaken an einem bezüglich des vorderen Endbereiches des Tragabschnittes in der Umfangsrichtung des Halteelementes seitlich vorstehenden Randbereich des Krallenabschnittes angeordnet ist und seitlich an dem Tragabschnitt vorbeiragt.

Eine derart ausgebildete Haltemanschette lässt sich mit ihren Sicherungs-Widerhaken bereits in einer eine nur geringe Tiefe aufweisenden ringförmigen Befestigungsnut, die am Innenumfang der Befestigungsöffnung eines Trägerbauteils ausgebildet ist, sicher fixieren. Es erübrigt sich die Ausbildung einer Befestigungsnut am Außenumfang der Haltemanschette und eine damit verbundene komplexe Formgebung der Haltearme des Halteelementes. Daher kann die Haltemanschette einschließlich des Halteelementes auch bei kleinen Dimensionen relativ einfach und kostengünstig hergestellt werden. Mit Hilfe der Sicherungs-Widerhaken lässt sich die Haltemanschette in einer am Innenumfang der Befestigungsöffnung des Trägerbauteils ausgebildeten Befestigungsnut selbst dann sicher fixieren, wenn diese Befestigungsnut eine sehr geringe radiale Tiefe hat. Folglich lässt sich eine zur Fixierung der Haltemanschette geeignete Befestigungsnut auch in solchen Befestigungsöffnungen sehr einfach ausbilden, die über kleine Durchmesser verfügen. So ist beispielsweise der Entformungsvorgang bei einer Spritzgießherstellung des Trägerbauteils bei einer Befestigungsnut geringer Tiefe völlig unproblematisch. Dadurch, dass die Sicherungs-Widerhaken direkt an den Krallenabschnitten ausgebildet sind, können sie sehr einfach und platzsparend in das Halteelement integriert werden. Außerdem sind die Sicherungs-Widerhaken auf diese Weise unmittelbar mit derjenigen Komponente, nämlich dem Krallenabschnitt, verbunden, die mit der festzuhaltenden Fluidleitung zusammenwirkt und die bei angeschlossener Fluidleitung den höchsten Belastungen ausgesetzt ist. Die Sicherungswirkung der Sicherungs-Widerhaken ist dadurch besonders gut.

Jeder Krallenabschnitt des Halteelementes ist mit seiner der Vorderkante entgegengesetzten Rückseite an einem Tragabschnitt des zugeordneten Haltearmes angeordnet, der die Verbindung zu dem ringförmigen Kopfabschnitt herstellt. Kopfabschnitt, Tragabschnitt und Krallenabschnitt sind dabei vorzugsweise einstückig miteinander verbunden. Die Krallenabschnitte sind zumindest teilweise und vorzugsweise in ihrer Gesamtheit mit einer Rückseite ausgeführt, die breiter ist als der sich unmittelbar anschließende vordere Endbereich des Tragabschnittes. Dies bietet eine vorteilhafte Möglichkeit, um den Krallenabschnitt mit zwei Sicherungs-Widerhaken auszustatten. So befindet sich zweckmäßigerweise an jedem bezüglich des vorderen Endbereichs des Tragabschnittes in der Umfangsrichtung des Halteelementes seitlich vorstehenden Randbereich des Krallenabschnittes ein Sicherungs-Widerhaken, der seitlich an dem Tragabschnitt vorbeiragt. Der Tragabschnitt ist also insbesondere an beiden seiner in der Umfangsrichtung des Halteelementes orientierten Längsseiten von einem Sicherungs-Widerhaken flankiert. Selbst wenn ein Krallenabschnitt über beide Längsseiten des sich anschließenden Tragabschnittes vorsteht, besteht die Möglichkeit, einen Sicherungs-Widerhaken an nur einem dieser beiden seitlich vorstehenden Randbereiche des Krallenabschnittes vorzusehen.

Vorteilhafte Weiterbildungen der Erfindung gehen aus den Unteransprüchen hervor.

Es besteht prinzipiell die Möglichkeit, nur einige der Krallenabschnitte des Halteelementes mit mindestens einem Sicherungs-Widerhaken zu versehen. Als optimal wird allerdings eine Ausführungsform angesehen, bei der jeder Krallenabschnitt mindestens einen Sicherungs-Widerhaken aufweist.

Der Sicherungs-Widerhaken ist vorzugsweise so ausgebildet, dass er bezüglich des sich an den Krallenabschnitt unmittelbar anschließenden vorderen Endabschnittes des Tragabschnittes nach radial außen vorsteht, zweckmäßigerweise mit einer schrägen Ausrichtung.

Für die Sicherungs-Widerhaken gilt generell, dass sie zweckmäßigerweise so ausgebildet und angeordnet sind, dass sie ausgehend von der Rückseite des zugeordneten Krallenabschnittes schräg nach rückwärts und zugleich nach radial außen wegragen.

Eine zusätzlich mögliche Realisierungsform für die Sicherungs-Widerhaken besteht darin, bei mindestens einem Krallenabschnitt einen Sicherungs-Widerhaken durch eine Materialzunge zu verwirklichen, die im unmittelbaren Anschluss an den Krallenabschnitt aus dem vorderen Endbereich des Tragabschnittes herausgebogen ist. Die Materialzunge schließt sich einstückig an die Rückseite des Krallenabschnittes an, wobei sie zweckmäßigerweise in den nicht mit dem Krallenabschnitt verbundenen Bereichen durch eine Stanzung oder ein sonstiges Durchtrennungsverfahren aus dem Tragabschnitt herausgetrennt ist. Am einfachsten lässt sich dies mittels eines Stanz-Biege-Verfahrens realisieren.

Vorzugsweise sind die Tragabschnitte der Haltearme so ausgebildet, dass sie jeweils über einen in einen Krallenabschnitt übergehenden vorderen Endbereich und einen axial entgegengesetzten, in den ringförmigen Kopfabschnitt übergehenden rückwärtigen Endbereich verfügen. Dabei erstrecken sie sich an keiner Stelle ihres Längsverlaufes weiter nach radial innen als an den vorderen Endbereichen. Der vordere Endbereich der Tragabschnitte der Haltearme ist zweckmäßigerweise der am weitesten radial innen liegende Bereich eines jeweiligen Tragabschnittes.

Vorzugsweise sind die Tragabschnitte der Haltearme so ausgebildet, dass sie jeweils einen sich ausgehend von der Rückseite des jeweils zugeordneten Krallenabschnittes rein axial in Richtung zum Kopfabschnitt erstreckenden vorderen Endabschnitt aufweisen und über einen sich über einen Knickbereich an den vorderen Endabschnitt anschließenden, schräg nach radial außen verlaufenden hinteren Endabschnitt verfügen, der über einen Biegebereich in den Kopfabschnitt übergeht. Der Biegebereich definiert zweckmäßigerweise einen rückwärtigen Endbereich des jeweiligen Haltearmes.

Der Haltemanschette ist zweckmäßigerweise in koaxialer Anordnung eine einstückige ringförmige Dichtungsstruktur zugeordnet, die eine Abdichtung der Haltemanschette bezüglich sowohl des Trägerbauteils als auch der eingesteckten Fluidleitung bewirkt. Die Dichtungsstruktur definiert zweckmäßigerweise einen zum abdichtenden Anliegen am Trägerbauteil vorgesehenen ringförmigen Außendichtungsabschnitt und darüber hinaus mindestens einen die eingesteckte Fluidleitung an ihrem Außenumfang abdichtend umschließenden ringförmigen Innendichtungsabschnitt.

Die Dichtungsstruktur gehört vorzugsweise zu der Haltemanschette und ist zweckmäßigerweise von einem unmittelbar bei seiner Herstellung durch Spritzgießen unter Abdichtung stoffschlüssig an das Halteelement angeformten gummielastischen Spritzgusskörper gebildet, wobei die Dichtungsstruktur zumindest partiell und einschließlich des ringförmigen Innendichtungsabschnittes an die radial beweglichen Krallenabschnitte angeformt ist und die zwischen benachbarten Krallenabschnitten vorhandenen Zwischenräume abdichtend überbrückt. Auf diese Weise erübrigt sich eine Ausstattung der Anschlussvorrichtung mit gesonderten Dichtungselementen, insbesondere separaten Dichtungsringen. Dies vereinfacht die Herstellung und die Montage der Haltemanschette.

Die Dichtungsstruktur ist insbesondere so an dem Halteelement angebracht, dass sie auch die Sicherungs-Widerhaken umhüllt und im Bereich der Sicherungs-Widerhaken einen nach radial außen vorstehenden ringförmigen Dichtwulst des Außendichtungsabschnittes bildet, der ausgebildet ist, um unter Abdichtung in die am Innenumfang der Befestigungsöffnung des Trägerbauteils ausgebildete Befestigungsnut einzugreifen. Zweckmäßigerweise kann die Haltemanschette zu ihrer Montage in die Befestigungsöffnung eingesteckt und dabei mit ihrem ringförmigen Dichtwulst in die Befestigungsnut der Befestigungsöffnung eingeschnappt werden.

Der Innendichtungsabschnitt ist zweckmäßigerweise an die der Einstecköffnung abgewandte Außenfläche der Krallenabschnitte angeformt und selbigen folglich axial vorgelagert. Er bildet insbesondere eine Innendichtungslippe, die mit hoher Dichtwirkung am Außenumfang der eingesteckten Fluidleitung abdichtend anliegt. Die Innendichtungslippe ist bevorzugt so gestaltet, dass sie von dem in der Befestigungsöffnung herrschenden Innendruck an den Außenumfang der eingesteckten Fluidleitung angedrückt wird, sodass die Dichtkraft druckabhängig ist und auch bei hohen Innendrücken eine zuverlässige Abdichtung gewährleistet ist.

Die Dichtungsstruktur ist zweckmäßigerweise ein einstückiger Bestandteil eines insgesamt einstückigen gummielastischen Hüllkörpers, der unmittelbar bei seiner Herstellung durch Spritzgießen unter Abdichtung stoffschlüssig an das Halteelement angeformt ist und der das Halteelement zumindest partiell und zweckmäßigerweise zumindest annähernd vollständig umhüllt. Die Vorderkanten der Krallenabschnitte und die diesbezüglich entgegengesetzten Außenkanten der Sicherungs-Widerhaken können von der Umhüllung ausgenommen sein und insbesondere bündig mit der Oberfläche des Hüllkörpers verlaufen.

Soll die Anschlussvorrichtung die Möglichkeit bieten, eine eingesteckte Fluidleitung bei Bedarf jederzeit einfach und beschädigungsfrei wieder aus der Haltemanschette entfernen zu können, ist der Haltemanschette zweckmäßigerweise eine zum lösenden Betätigen der Krallenabschnitte dienende Lösehülse zugeordnet. Eine solche Lösehülse kann in der Haltemanschette axial verschiebbar gelagert sein, wobei sie den Krallenabschnitten axial außen vorgelagert ist und mit einem Betätigungsabschnitt rückseitig aus der Haltemanschette herausragt. Durch Druck auf den Betätigungsabschnitt kann die Lösehülse in Richtung der Vorderseite der Haltemanschette verschoben werden, sodass sie rückseitig auf die Krallenabschnitte einwirkt und selbige unter federelastischer Verformung vom Außenumfang der eingesteckten Fluidleitung abhebt. Die Lösehülse ist mit der Haltemanschette zweckmäßigerweise zu einer einheitlich handhabbaren Baugruppe zusammengefasst, die man als eine Anschlusseinheit bezeichnen kann.

Bei dem Halteelement handelt es sich vorzugsweise um ein einstückiges Bauteil. Es besteht insbesondere aus einem federelastischen Metall, insbesondere aus Edelstahl. Bevorzugt ist es durch einen kombinierten Stanz- und Biegevorgang gefertigt, sodass es als sogenanntes Stanzbiegeteil vorliegt.

In dem mit der Haltemanschette bestückbaren oder bestückten Trägerbauteil ist zweckmäßigerweise ein Fluidkanal ausgebildet, der mit der Befestigungsöffnung kommuniziert. Der in der angeschlossenen Fluidleitung ausgebildete Leitungskanal steht somit bei angeschlossener Fluidleitung mit dem Fluidkanal des Trägerbauteils in Verbindung.

Bei einer möglichen Ausführungsform ist die Anschlussvorrichtung als Anschlussstück konzipiert, das sich an einem fluidtechnischen Gerät, beispielsweise ein Ventil oder ein Antrieb, fixieren lässt, um an diesem fluidtechnischen Gerät mindestens eine Fluidleitung anschließen zu können. Darüber hinaus besteht allerdings auch die Möglichkeit, unmittelbar einen Bestandteil eines fluidtechnischen Gerätes, beispielsweise dessen Gerätegehäuse, als Trägerbauteil zu nutzen, wobei dann dieser Bestandteil des fluidtechnischen Gerätes mit der eine Befestigungsnut aufweisenden Befestigungsöffnung ausgestattet ist, um die Haltemanschette darin sicher fixieren zu können.

Nachfolgend wird die Erfindung anhand der beiliegenden Zeichnung näher erläutert. In dieser zeigen:
- Figur 1: einen Längsschnitt durch eine bevorzugte Ausführungsform der erfindungsgemäßen Anschlussvorrichtung, wobei die Haltemanschette in ihrer in der Befestigungsöffnung eines Trägerbauteils fixierten Gebrauchsstellung gezeigt ist,

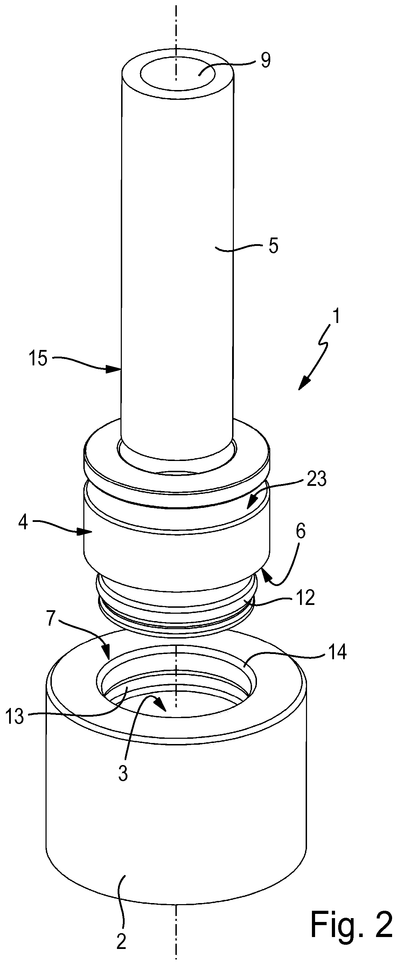

- Figur 2: die Anordnung aus Figur 1 in einer perspektivischen Explosionsdarstellung,

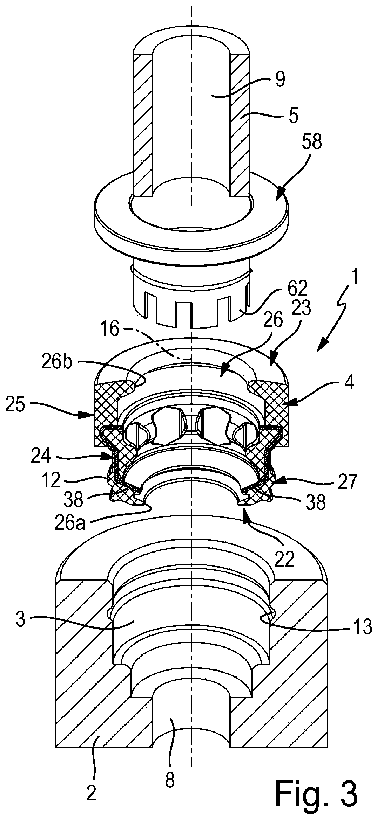

- Figur 3: die Explosionsdarstellung aus Figur 1 in einem Längsschnitt, wobei die optionale Lösehülse außer Eingriff mit der Haltemanschette gezeigt ist,
- Figur 4: eine Einzeldarstellung der gemäß Figuren 1 bis 3 vorhandenen Haltemanschette in einer Seitenansicht,
- Figur 5: die Haltemanschette aus Figur 4 in einem Längsschnitt, wobei das zugeordnete Trägerbauteil gestrichelt angedeutet ist,
- Figur 6: eine perspektivische Längsschnittdarstellung des gemäß Figuren 1 bis 5 zum Einsatz kommenden Halteelementes,
- Figur 7: einen Längsschnitt durch den vorderen Endabschnitt der Haltemanschette, und
- Figur 8: eine Einzeldarstellung des Halteelementes in einer Schrägansicht von unten her.

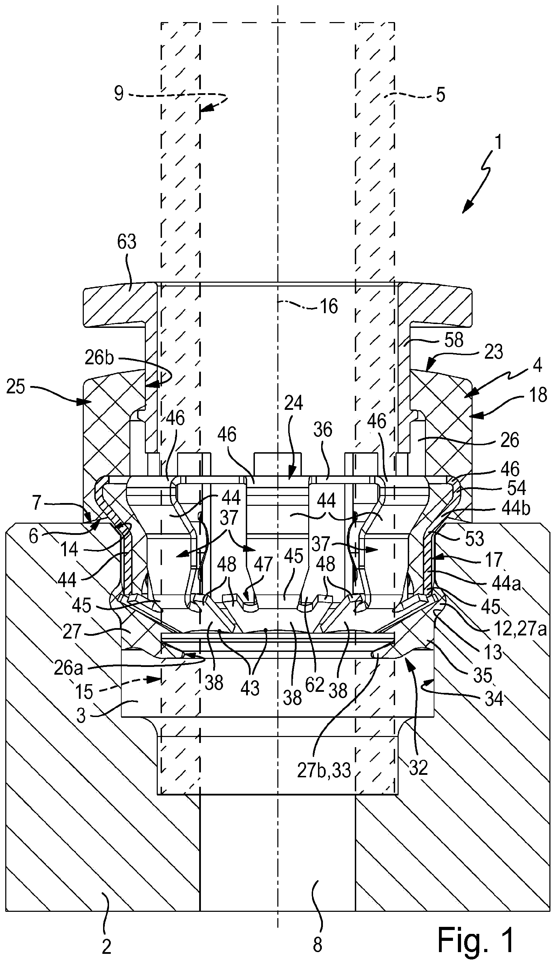

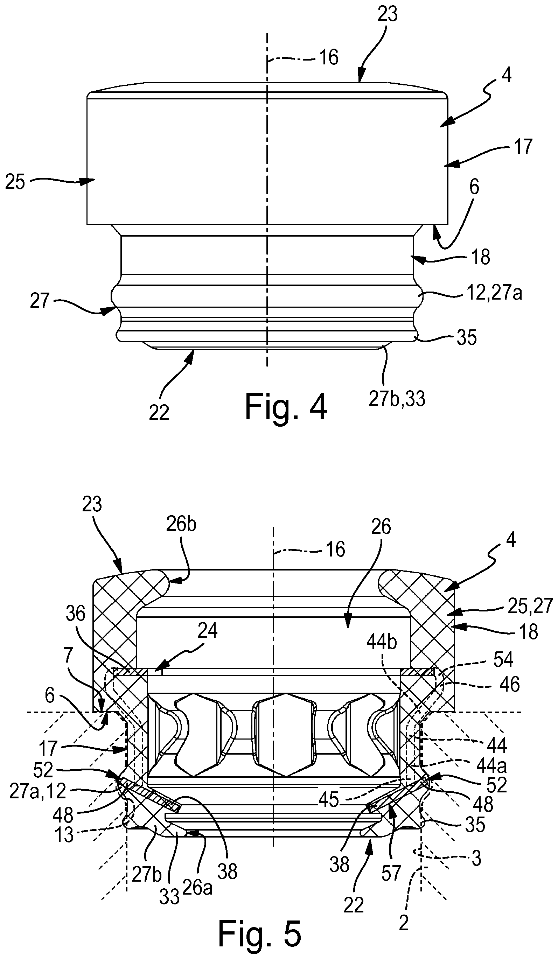

Die in ihrer Gesamtheit mit Bezugsziffer 1 bezeichnete Anschlussvorrichtung enthält eine manschettenförmig gestaltete Halteeinrichtung, die als Haltemanschette 4 bezeichnet sei und die in ihrer in den Figuren 1 und 5 illustrierten Gebrauchsstellung in eine Befestigungsöffnung 3 eines separaten Trägerbauteils 2 eingreift und in dieser Befestigungsöffnung 3 befestigt ist.

Die Anschlussvorrichtung 1 eignet sich zum Anschließen einer Fluidleitung 5, die zum Hindurchleiten eines fluidischen Druckmediums mit Druckluft oder Druckflüssigkeit ausgebildet ist. Bevorzugt handelt es sich bei der anschließbaren Fluidleitung 5 um einen flexiblen Schlauch. Gleichwohl kann es sich bei ihr auch um ein starres Rohr handeln. In der Figur 1 ist die Fluidleitung 5 im angeschlossenen Zustand gezeigt.

Schon die Haltemanschette 4 allein kann die Anschlussvorrichtung 1 bilden. Sie kann mit jedem beliebigen Trägerbauteil 2, das über eine geeignet gestaltete Befestigungsöffnung 3 verfügt, kombiniert und zu einer Baugruppe vereint werden. Vorhandene Trägerbauteile 2 können somit nach Bedarf mit einer oder mehreren Haltemanschetten 4 ausgestattet werden.

Andererseits kann die Anschlussvorrichtung 1 auch als eine Baugruppe ausgeführt sein, die sich aus mindestens einer Haltemanschette 4 und einem Trägerbauteil 2 zusammensetzt, wobei das Trägerbauteil 2 mit mindestens einer zur Aufnahme der Haltemanschette 4 angepassten Befestigungseinrichtung 3 ausgestattet ist. Dabei kann die Haltemanschette 4 schon ab Werk bei der Auslieferung am Trägerbauteil 2 in ihrer Gebrauchsstellung montiert sein, oder sie kann als lose Beigabe beiliegen, die erst vom Anwender mit dem Trägerbauteil 2 vereinigt wird.

Bei einem möglichen Ausführungsbeispiel ist die Anschlussvorrichtung 1 als ein Anschlussstück konzipiert, bei dem das Trägerbauteil 2 mindestens eine nicht weiter illustrierte Befestigungsschnittstelle aufweist, mit der es und somit das Anschlussstück in seiner Gesamtheit an einer fluidtechnischen Komponente fixierbar ist, beispielsweise an einem Ventil, einem fluidbetätigten Antrieb oder einem Druckluft-Wartungsgerät. Bei entsprechender Ausgestaltung der Befestigungsschnittstelle lässt sich daran auch eine weitere Fluidleitung fixieren. Das Anschlussstück kann ohne weiteres mehrere Haltemanschetten 4 aufweisen, um beispielsweise ein Winkelstück oder eine zum gleichzeitigen Anschließen mehrerer Fluidleitungen geeignetes T-Stück zu realisieren.

Bei einem anderen Ausführungsbeispiel ist das Trägerbauteil 2 direkt von einem Bestandteil einer fluidtechnischen Komponente der oben genannten Art gebildet, beispielsweise vom Gehäuse einer fluidtechnischen Komponente. Auf diese Weise erübrigt sich ein von der fluidtechnischen Komponente unabhängiges, eigenständiges Trägerbauteil 2.

Die in dem Trägerbauteil 2 nach Art einer Ausnehmung ausgebildete Befestigungsöffnung 3 mündet einenends zu einer im Folgenden als Anschluss-Außenfläche 7 bezeichneten Außenfläche des Trägerbauteils 2 aus. Im Innern des Trägerbauteils 2 schließt sich an die Befestigungsöffnung 3, insbesondere mit koaxialer Ausrichtung, ein Fluidkanal 8 an, mit dem ein die Fluidleitung 5 durchsetzender Leitungskanal 9 bei angeschlossener Fluidleitung 5 in Fluidverbindung steht. Von dem Trägerbauteil 2 ist in der Zeichnung nur ein Ausschnitt gezeigt.

Die Haltemanschette 4 hat eine Längsachse 16 und verfügt quer zu dieser Längsachse 16 über einen ringförmigen Querschnitt. Sie hat eine axial orientierte Vorderseite 22 und eine diesbezüglich axial entgegengesetzte Rückseite 23 und ist koaxial durchbrochen, wobei die Durchbrechung aufgrund ihrer Funktion als Einstecköffnung 26 bezeichnet sei. Die Einstecköffnung 26 mündet einerseits mit einer vorderen Mündungsöffnung 26a zu der Vorderseite 22 und mit einer entgegengesetzten rückseitigen Mündungsöffnung 26b zu der Rückseite 23 aus.

In ihrer montierten Gebrauchsstellung ragt die Haltemanschette 4 durch die an der Anschluss-Außenfläche 7 liegende Mündung 14 der Befestigungsöffnung 3 in die Befestigungsöffnung 3 axial hinein. Grundsätzlich könnte die Haltemanschette 4 dabei über ihre gesamte Länge in der Befestigungsöffnung 3 aufgenommen sein. Zu Gunsten einer einfachen Handhabung bei der Montage und auch eventuellen Demontage ist es allerdings vorteilhaft, wenn die Haltemanschette 4 nur mit einem Teil ihrer axialen Länge in die Befestigungsöffnung 3 hineinragt, was auf das Ausführungsbeispiel zutrifft. Der sich in der Befestigungsöffnung 3 erstreckende Längenabschnitt der Haltemanschette 4 sei im Folgenden als Befestigungsabschnitt 17 bezeichnet und der außerhalb der Befestigungsöffnung 3 liegende Längenabschnitt als Kopfabschnitt 18.

Der Kopfabschnitt 18 hat zweckmäßigerweise einen größeren Durchmesser als der Befestigungsabschnitt 17, woraus an der dem Befestigungsabschnitt 17 zugewandten vorderen Stirnseite des Kopfabschnittes 18 eine den Befestigungsabschnitt 17 umrahmende ringförmige Abstützfläche 6 resultiert, die in der montierten Gebrauchsstellung der Haltemanschette 4 zweckmäßigerweise an der die Mündung 14 umrahmenden Anschluss-Außenfläche 7 des Trägerbauteils 2 anliegt.

Der Befestigungsabschnitt 17 ist peripher mit einem zu der Längsachse 16 konzentrischen Dichtwulst 12 versehen. Eine zu diesem Dichtwulst 12 komplementäre ringförmige Befestigungsnut 13 befindet sich am Innenumfang der Befestigungsöffnung 3 in demjenigen Längenabschnitt der Befestigungsöffnung 3, in dem sich der Befestigungsabschnitt 17 befindet, wenn die Haltemanschette 4 in die Gebrauchsstellung eingesteckt ist. Bevorzugt ist die Befestigungsnut 13 derart axial tief in der Befestigungsöffnung 3 angeordnet, dass sie auf gleicher axialer Höhe mit dem Dichtwulst 12 liegt, wenn die Haltemanschette 4 mit ihrer Abstützfläche 6 an der Anschluss-Außenfläche 7 des Trägerbauteils 2 anliegt.

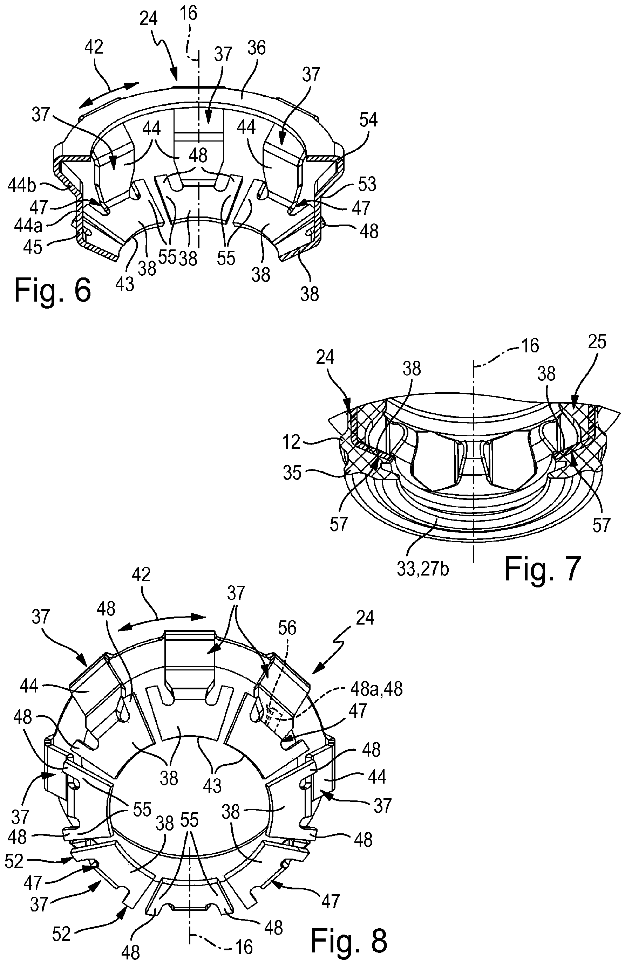

Der Dichtwulst 12 ist Bestandteil eines bevorzugt einstückigen, aus einem gummielastischen Material bestehenden Hüllkörpers 25 der Haltemanschette 4, in den ein bevorzugt einstückig ausgebildetes Halteelement 24 der Haltemanschette 4 eingebettet ist. Das Halteelement 24 ist in den Figuren 6 und 8 einzeln abgebildet.

Das Halteelement 24 ist für das axiale Festhalten der durch die Rückseite der Mündungsöffnung 26b hindurch in die Einstecköffnung 26 eingesteckten Fluidleitung 5 zuständig. Es ist außerdem maßgeblich verantwortlich für eine sichere axiale Fixierung der in die Befestigungsöffnung 3 eingesteckten Haltemanschette 4 und verhindert deren unbeabsichtigtes Herausziehen aus der Befestigungsöffnung 3.

Vorzugsweise besteht der Hüllkörper 25 aus einem Kunststoffmaterial, insbesondere aus einem Elastomermaterial. Er ist mit dem Halteelement 24 zu einer die Haltemanschette 4 bildenden Baueinheit verbunden, die einheitlich handhabbar ist. Vorzugsweise ist der Hüllkörper 25 unmittelbar bei seiner Herstellung durch Spritzgießen unter Abdichtung stoffschlüssig an das Halteelement 24 angeformt worden, sodass er das Halteelement 24 zumindest partiell und zweckmäßigerweise zumindest annähernd vollständig umhüllt.

Die gummielastischen Eigenschaften des Hüllkörpers 25 ermöglichen es, den Hüllkörper 25 nicht nur als Ummantelung für das Halteelement zu nutzen, sondern auch - zumindest teilweise - als eine Dichtungsstruktur 27, die in der montierten Gebrauchsstellung der Haltemanschette 4 eine Abdichtung der Haltemanschette 4 sowohl bezüglich des Trägerbauteils 2 als auch bezüglich der eingesteckten Fluidleitung 5 bewirkt.

So bildet der insgesamt hülsenartig aufgebaute Hüllkörper 25 mindestens einen zum abdichtenden Anliegen am Trägerbauteil 2 vorgesehenen ringförmigen Außendichtungsabschnitt 27a und ferner mindestens einen die eingesteckte Fluidleitung an ihrer Außenumfangsfläche 15 abdichtend umschließenden Innendichtungsabschnitt 27b.

Der weiter oben erwähnte Dichtwulst 12 gehört zu dem Außendichtungsabschnitt 27a. Zweckmäßigerweise ist am Außenumfang des Befestigungsabschnittes 17 mit axialem Abstand zu dem Dichtwulst 12, insbesondere auf der der Vorderseite 22 zugewandten Seite des Dichtwulstes 12, ein weiterer ringförmiger Dichtwulst 35 ausgebildet, der unter Abdichtung mit axialem Abstand zu der Befestigungsnut 13 an der Innenumfangsfläche 34 der Befestigungsöffnung 3 anliegt.

Der Innendichtungsabschnitt 27b enthält zweckmäßigerweise eine im Bereich der Vorderseite 22 der Haltemanschette 4 angeordnete Dichtungslippe, die aufgrund ihrer Funktion als Innendichtungslippe 33 bezeichnet sei und die sich konzentrisch um die Längsachse 16 herum erstreckt. Sie liegt unter radialer Vorspannung an der Außenumfangsfläche 15 der Fluidleitung 5 an, wenn diese durch die Haltemanschette 4 hindurchgesteckt ist.

Das schon angesprochene Halteelement 24 ist ringförmig strukturiert und koaxial zu dem Hüllkörper 25 ausgerichtet. An seinem der Rückseite 23 zugewandten Endbereich verfügt es über einen die Einstecköffnung 26 umschließenden ringförmigen Kopfabschnitt 36, der konzentrisch zu der Längsachse 16 angeordnet ist. Dieser ringförmige Kopfabschnitt 36 hat eine Umfangsrichtung, die in den Figuren 6 und 8 bei 42 durch einen Doppelpfeil kenntlich gemacht ist und bei der es sich um die Richtung rings um die Längsachse 16 der Haltemanschette 4 handelt. Diese Umfangsrichtung 42 ist gleichzeitig die Umfangsrichtung des Halteelementes 24.

Von dem ringförmigen Kopfabschnitt 36 ragen mehrere, in Bezug auf die Längsachse 16 radial federelastisch biegbare Haltearme 37 in axialer Richtung in Richtung zu der Vorderseite 22 weg. Die Haltearme 37 sind mit gegenseitigem Abstand in der Umfangsrichtung 42 verteilt an dem Kopfabschnitt 36 angebracht, wobei sie vorzugsweise einstückig mit diesem ringförmigen Kopfabschnitt 36 verbunden sind. Die Haltearme 37 sind insbesondere gleichmäßig in der Umfangsrichtung 42 verteilt.

Der Kopfabschnitt 36 hat insbesondere die Form einer Ringscheibe mit zu der Längsachse 16 radialer Scheibenebene. Die Haltearme 37 sind vorzugsweise im Bereich des radial außen liegenden Außenumfanges des Kopfabschnittes 36 angeformt.

Die Haltearme 37 sind unabhängig voneinander radial bezüglich der Längsachse 16 federelastisch verformbar.

Jeder Haltearm 37 endet an der dem Kopfabschnitt 36 axial entgegengesetzten Vorderseite mit einem krallenförmig ausgebildeten Endabschnitt, der zur besseren Unterscheidung als Krallenabschnitt 38 bezeichnet sei. Jeder Krallenabschnitt 38 hat eine der Vorderseite 22 zugewandte freie Vorderkante 43, wobei er bezüglich der Längsachse 16 schräg ausgerichtet ist und sich zu der Vorderkante 43 hin axial und gleichzeitig nach radial innen erstreckt.

Jeder Haltearm 37 lässt sich gedanklich in den Krallenabschnitt 38 und einen Tragabschnitt 44 unterteilen, wobei eine einstückige Verbindung zwischen dem Krallenabschnitt 38 und dem Tragabschnitt 44 vorliegt. Der Tragabschnitt 44 stellt die Verbindung zwischen dem Krallenabschnitt 38 und dem Kopfabschnitt 36 her. Jeder Tragabschnitt 44 hat einen der Vorderseite 22 zugewandten vorderen Endbereich 45, der mit der der Vorderkante 43 entgegengesetzten Rückseite 47 des zugeordneten Krallenabschnittes 38 einstückig verbunden ist. Außerdem hat jeder Tragabschnitt 44 einen dem vorderen Endbereich 45 entgegengesetzten rückwärtigen Endbereich 46, mit dem er in den Kopfabschnitt 36 übergeht. Die Krallenabschnitte 38 verlaufen ausgehend von ihrer Rückseite 47 schräg nach vorne und gleichzeitig nach innen in Richtung zu der Längsachse 16.

Zumindest einige, vorzugsweise aber sämtliche Krallenabschnitte 38 sind an ihrer Rückseite 47 mit mindestens einem nach rückwärts und zugleich nach radial außen ragenden Sicherungs-Widerhaken 48 versehen, der einstückig mit dem Krallenabschnitt 38 ausgebildet ist. Der an einem Krallenabschnitt 38 angeordnete Sicherungs-Widerhaken 48 erstreckt sich zweckmäßigerweise in der gleichen schrägen Ebene wie der Krallenabschnitt 38. Die Sicherungs-Widerhaken 48 sind bevorzugt zungenartig oder laschenartig ausgebildet.

Zweckmäßigerweise sind die Sicherungs-Widerhaken 48 so ausgestaltet, dass sie gegenüber dem sich unmittelbar an den zugeordneten Krallenabschnitt 38 rückseitig anschließenden vorderen Endbereich 45 des Tragabschnittes 44 nach radial außen vorstehen. Jeder Sicherungs-Widerhaken 48 endet daher an der dem Sicherungs-Widerhaken 48 entgegengesetzten Seite mit einer Widerhaken-Kante 52, die bezogen auf die Längsachse 16 radial weiter außen liegt als der sich daran anschließende vordere Endbereich 45 des den Krallenabschnitt 38 tragenden Tragabschnittes 44.

Die Haltearme 37 sind so gestaltet, dass die Sicherungs-Widerhaken 48 in der in die Befestigungsöffnung 3 eingesetzten Gebrauchsstellung der Haltemanschette 4 auf zumindest im Wesentlichen gleicher axialer Höhe liegen wie die Befestigungsnut 13. Die Widerhaken-Kanten 52 der Sicherungs-Widerhaken 48 liegen auf einer Kreislinie, deren Durchmesser größer ist als der Durchmesser der Befestigungsöffnung 3 axial neben der Befestigungsnut 13. In der montierten Gebrauchsstellung der Haltemanschette 4 greifen daher sämtliche Sicherungs-Widerhaken 48 radial in die Befestigungsnut 13 ein. Ihre Widerhaken-Kante 52 ist dabei mit schräger Ausrichtung der Mündung 14 der Befestigungsöffnung 3 zugewandt, sodass sie sich an der auf der Seite der Mündung 14 liegenden Nutflanke der Befestigungsnut 13 abstützen kann. Ersichtlich erfüllen die Sicherungs-Widerhaken 48 also den Zweck, die in die Befestigungsöffnung 3 unter Einnahme der Gebrauchsstellung eingesteckte Haltemanschette 4 axial zu fixieren und gegen ein axiales Herausziehen aus der Befestigungsöffnung 3 zu sichern.

Der Hüllkörper 25 ist vorzugsweise so ausgebildet, dass die Sicherungs-Widerhaken 48 in den oben beschriebenen Dichtwulst 12 eingebettet sind. Auf diese Weise kann die ringförmige Befestigungsnut 13 sowohl zur axialen Fixierung als auch zur externen Abdichtung der Haltemanschette 4 genutzt werden.

Beim Ausführungsbeispiel sind die Sicherungs-Widerhaken 48 von dem Dichtwulst 12 vollständig umhüllt. Bei einer nicht gezeigten Ausführungsform werden die Widerhaken-Kanten 52 von dem Hüllkörper 25 nicht bedeckt.

Vergleichbar verhält es sich im Übrigen auch bei den Vorderkanten 43 der Krallenabschnitte 38. Selbige sind beim Ausführungsbeispiel vom Hüllkörper 25 mit einem dünnen Film bedeckt, können aber ohne weiteres auch frei liegen.

Die Tragabschnitte 44 der Haltearme 37 sind zweckmäßigerweise so geformt, dass sie an keiner Stelle ihres Längsverlaufes weiter nach radial innen ragen als an den in die Krallenabschnitte 38 übergehenden vorderen Endbereichen 45. Dies ist beim Ausführungsbeispiel der Fall. Insbesondere definiert der vordere Endbereich 45 den am weitesten radial innen liegenden Bereich jedes Tragabschnittes 44.

Eine besonders vorteilhafte Formgebung der Tragabschnitte 44 der Haltearme 37 zeigt das Ausführungsbeispiel. Hier hat jeder Tragabschnitt 44 ausgehend von der Rückseite 47 des jeweils zugeordneten Krallenabschnittes 38 einen sich rein axial nach rückwärts in Richtung zum Kopfabschnitt 36 erstreckenden vorderen Teilabschnitt 44a und einen sich über einen Knickbereich 53 daran anschließenden, sich schräg nach rückwärts und gleichzeitig nach radial außen erstreckenden hinteren Teilabschnitt 44b, der über einen Biegebereich 54 einstückig in den Kopfabschnitt 36 übergeht.

In der montierten Gebrauchsstellung der Haltemanschette 4 erstrecken sich die vorderen Teilabschnitte 44a in der Befestigungsöffnung 3 bis in den Bereich der Mündung 14, wo sich die schräg nach außen ragenden hinteren Teilabschnitte 44b anschließen, die aus der Befestigungsöffnung 3 herausragen. Der ringförmige Kopfabschnitt 36 des Halteelementes 24 liegt in der Gebrauchsstellung der Haltemanschette 4 außerhalb der Befestigungsöffnung 3 und ist in den Kopfabschnitt 18 des Hüllkörpers 25 eingebettet.

Wie das Ausführungsbeispiel verdeutlicht, können entweder einer oder mehrere oder sämtliche der Krallenabschnitte 38 an ihrer Rückseite 47 eine größere Breite in der Umfangsrichtung 42 haben als der sich anschließende vordere Endbereich 45 des Tragabschnittes 44. Diese Gegebenheiten treffen beim Ausführungsbeispiel auf sämtliche Haltearme 37 zu. Hier sind die Krallenabschnitte 38 zudem so an den Tragabschnitten 44 angeordnet, dass jeder Tragabschnitt 44 vom zugeordneten Krallenabschnitt 38 an beiden in der Umfangsrichtung 42 orientierten Längsseiten von einem seitlich vorstehenden Randbereich 55 des Krallenabschnittes 38 überragt ist. An mindestens einem und vorzugsweise an jedem dieser beiden seitlichen Randbereiche 55 eines jeweiligen Krallenabschnittes 38 ist rückseitig einer der abstehenden Sicherungs-Widerhaken 48 angeformt. Die Sicherungs-Widerhaken 48 erstrecken sich daher seitlich an dem sich anschließenden Tragabschnitt 44 vorbei und ragen neben diesem Tragabschnitt 44 radial nach außen. Pro Haltearm 37 ist also zweckmäßigerweise der Tragabschnitt 44 von jeweils zwei Sicherungs-Widerhaken 48 partiell flankiert.

In Figur 8 ist gestrichelt eine alternative Ausführungsform der Sicherungs-Widerhaken 48 angedeutet, bei denen sie aus einer aus dem vorderen Endbereich 45 beziehungsweise aus dem vorderen Teilabschnitt 44a des Tragabschnittes 44 herausgeschnittenen und herausgebogenen Materialzunge 48a bestehen. Der Bereich des Tragabschnittes 44, in dem sich vor dem insbesondere als Stanzvorgang ausgeführten Schneidvorgang die Materialzunge 48a befand, stellt sich nach dem Herausbiegen der Materialzunge 48a als eine fensterartige Durchbrechung dar. Die einzige Verbindung der Materialzunge 48a zu den übrigen Bestandteilen des Haltearmes 37 befindet sich wiederum unmittelbar an der Rückseite 47 des Krallenabschnittes 38.

Das bevorzugt einstückige Halteelement 24 besteht zweckmäßigerweise aus einem federelastischen Metall. Es empfiehlt sich insbesondere Edelstahl. Die beschriebene Formgebung lässt sich vor allem bei einer Ausführung als Stanzbiegeteil kostengünstig realisieren.

Bei einem nicht gezeigten Ausführungsbeispiel liegen die Sicherungs-Widerhaken 48 vollständig frei und sind nicht in einen Hüllkörper 25 eingebettet. Der Dichtwulst 12 ist zwar besonders vorteilhaft, gleichwohl jedoch optional.

Die weiter oben erwähnte Dichtungsstruktur 27 ist an dem Halteelement 24 zweckmäßigerweise zumindest an die zu der Vorderseite 22 weisende vordere Außenfläche 57 der Krallenabschnitte 38 angeformt. Dabei ist die Dichtungsstruktur 27 derart ringförmig in sich geschlossen ausgebildet, dass sie auch die zwischen in der Umfangsrichtung 42 benachbarten Krallenabschnitten 38 vorhandenen Zwischenräume verschließt. Wenn daher im angeschlossenen Zustand einer Fluidleitung 5 die Innendichtungslippe 33 am Außenumfang 15 der Fluidleitung 5 anliegt und der weitere Dichtwulst 35 an der Innenumfangsfläche 34 der Befestigungsöffnung 3 anliegt, ist der der Haltemanschette 4 axial vorgelagerte Abschnitt der Befestigungsöffnung 3 und mithin auch die Verbindung zwischen dem Fluidkanal 8 und dem Leitungskanal 9 zur Umgebung hin abgedichtet.

Soll eine in die Haltemanschette 4 eingesteckte und von den Krallenabschnitten 38 festgehaltene Fluidleitung 5 wieder leicht entnommen werden können, besteht die Möglichkeit, die Anschlussvorrichtung 1 mit einer der Haltemanschette 4 zugeordneten zusätzlichen Lösehülse 58 auszustatten. Eine solche Ausstattungsvariante ist in der Zeichnung illustriert.

Die Lösehülse 58 erstreckt sich koaxial in der Einstecköffnung 26 der Haltemanschette 4 und ist relativ zu der Haltemanschette 4 und mithin auch relativ zu dem Halteelement 24 axial bewegbar. Ein vorderer Endabschnitt 62 der Lösehülse 58 endet gegenüber den nach rückwärts orientierten Flächen der Krallenabschnitte 38, während ein rückseitiger Betätigungsabschnitt 63 der Lösehülse 58 axial aus der Einstecköffnung 26 herausragt. Die Fluidleitung 5 wird beim Anschlussvorgang durch die Lösehülse 58 hindurchgesteckt. Zum Lösen der Fluidleitung 5 kann auf den Betätigungsabschnitt 63 der Lösehülse 58 eine drückende Kraft ausgeübt werden, sodass die Lösehülse 58 in Richtung der Vorderseite 22 der Haltemanschette 4 verschoben wird und mit ihrem vorderen Endabschnitt 62 rückseitig auf die Krallenabschnitte 38 drückt, die folglich radial nach außen gebogen werden, sodass sie von der Außenumfangsfläche 15 der Fluidleitung 5 abgehoben sind. In diesem Zustand lässt sich die Fluidleitung 5 dann bequem wieder her-.. ausziehen.

## Patentansprüche

1. Anschlussvorrichtung für eine Fluidleitung (5), mit einer Haltemanschette (4), die ausgebildet ist, um in einer Gebrauchsstellung mit ihrer Vorderseite (22) voraus in eine Befestigungsöffnung (3) eines gesonderten Trägerbauteils (2) einzugreifen und in dieser Befestigungsöffnung (3) befestigt zu sein, und die axial von einer Einstecköffnung (26) durchsetzt ist, in die eine anzuschließende Fluidleitung (5) von der Rückseite (23) der Haltemanschette (4) her einsteckbar ist, wobei die Haltemanschette (4) über ein ringförmig strukturiertes Halteelement (24) verfügt, das rückseitig einen die Einstecköffnung (26) umschließenden ringförmigen Kopfabschnitt (36) aufweist, von dem mehrere mit gegenseitigem Abstand um die Einstecköffnung (26) herum verteilte Haltearme (37) axial nach vorne wegragen, die bezüglich des Kopfabschnittes (36) radial federelastisch verformbar sind und die jeweils mit einem schräg nach vorne und zugleich nach radial innen ragenden Krallenabschnitt (38) enden, der ausgebildet ist, um mit seiner Vorderkante (43) den Außenumfang (15) der eingesteckten Fluidleitung (5) zum Zwecke ihres Festhaltens zu beaufschlagen, wobei jeder Krallenabschnitt (38) mit seiner der Vorderkante (43) entgegengesetzten Rückseite (47) an einem mit dem Kopfabschnitt (36) verbundenen Tragabschnitt (44) des zugeordneten Haltearmes (37) angeordnet ist, **dadurch gekennzeichnet, dass** an zumindest einigen der Krallenabschnitte (38) rückseitig mindestens ein nach rückwärts und zugleich nach radial außen ragender Sicherungs-Widerhaken (48) einstückig angeformt ist, der dazu vorgesehen ist, in eine am Innenumfang (34) der Befestigungsöffnung (3) des Trägerbauteils (2) ausgebildete Befestigungsnut (13) einzugreifen und dadurch die Haltemanschette (4) gegen Herausziehen aus der Befestigungsöffnung (3) zu sichern, wobei mindestens ein Krallenabschnitt (38) an seiner Rückseite (47) breiter ist als der sich anschließende vordere Endbereich (45) des Tragabschnittes (44) des Haltearmes (37) und wobei mindestens ein Sicherungs-Widerhaken (48) an einem bezüglich des vorderen Endbereiches (45) des Tragabschnittes (44) in der Umfangsrichtung (42) des Halteelementes (24) seitlich vorstehenden Randbereich (55) des Krallenabschnittes (38) angeordnet ist und seitlich an dem Tragabschnitt (44) vorbeiragt.

2. Anschlussvorrichtung nach Anspruch 1, **dadurch gekennzeichnet, dass** jeder Krallenabschnitt (38) des Halteelementes (24) mit mindestens einem Sicherungs-Widerhaken (48) versehen ist.

3. Anschlussvorrichtung nach Anspruch 1 oder 2, **dadurch gekennzeichnet, dass** der Sicherungs-Widerhaken (48) bezüglich des sich an den Krallenabschnitt (38) anschließenden vorderen Endbereiches (45) des Tragabschnittes (44) nach radial außen vorsteht, insbesondere mit schräger Ausrichtung.

4. Anschlussvorrichtung nach einem der Ansprüche 1 bis 3, **dadurch gekennzeichnet, dass** jeder Krallenabschnitt (38) an seiner Rückseite (47) breiter ist als der sich anschließende vordere Endbereich (45) des Tragabschnittes (44) des Haltearmes (37).

5. Anschlussvorrichtung nach einem der Ansprüche 1 bis 4, **dadurch gekennzeichnet, dass** mindestens ein und zweckmäßigerweise jeder Krallenabschnitt (38) an seiner Rückseite (47) seitlich beidseits mit jeweils einem Randbereich (55) über den sich anschließenden vorderen Endbereich (45) des Tragabschnittes (44) vorsteht und an beiden Randbereichen (55) mit jeweils einem Sicherungs-Widerhaken (48) versehen ist, derart, dass der vordere Endbereich (45) des Tragabschnittes (44) beidseits von jeweils einem Sicherungs-Widerhaken (48) flankiert ist.

6. Anschlussvorrichtung nach einem der Ansprüche 1 bis 5, **dadurch gekennzeichnet, dass** bei mindestens einem Krallenabschnitt (38) mindestens ein Sicherungs-Widerhaken (48) von einer aus dem sich anschließenden vorderen Endbereich (45) des Tragabschnittes (44) herausgebogenen Materialzunge (48a) gebildet ist.

7. Anschlussvorrichtung nach einem der Ansprüche 1 bis 6, **dadurch gekennzeichnet, dass** die Tragabschnitte (44) der Haltearme (37) jeweils einen in einen Krallenabschnitt (38) übergehenden vorderen Endbereich (45) und einen axial entgegengesetzten, in den ringförmigen Kopfabschnitt (36) übergehenden rückwärtigen Endbereich (46) aufweisen, wobei sie an keiner Stelle ihres Längsverlaufes weiter nach radial innen ragen als an ihren vorderen Endbereichen (45).

8. Anschlussvorrichtung nach einem der Ansprüche 1 bis 7, **dadurch gekennzeichnet, dass** die Tragabschnitte (44) der Haltearme (37) jeweils einen sich ausgehend von der Rückseite (47) des jeweils zugeordneten Krallenabschnittes (38) rein axial in Richtung zum Kopfabschnitt (36) erstreckenden vorderen Teilabschnitt (44a) und einen sich über einen Knickbereich (53) an den vorderen Teilabschnitt (44a) anschließenden, schräg nach radial außen verlaufenden hinteren Teilabschnitt (44b) aufweisen, der über einen Biegebereich (54) in den Kopfabschnitt (36) übergeht.

9. Anschlussvorrichtung nach einem der Ansprüche 1 bis 8, **dadurch gekennzeichnet, dass** der Haltemanschette (4) koaxial eine einstückige ringförmige Dichtungsstruktur (27) zugeordnet ist, die einen zum abdichtenden Anliegen an der Innenumfangsfläche (34) der Befestigungsöffnung (3) des Trägerbauteils (2) vorgesehenen ringförmigen Außendichtungsabschnitt (27a) und einen die eingesteckte Fluidleitung (5) an ihrem Außenumfang (15) abdichtend umschließenden ringförmigen Innendichtungsabschnitt (27b) aufweist, wobei zweckmäßigerweise die Dichtungsstruktur (27) zu der Haltemanschette (4) gehört und von einem unmittelbar bei seiner Herstellung durch Spritzgießen unter Abdichtung stoffschlüssig an das Halteelement (24) angeformten gummielastischen Spritzgusskörper gebildet ist, wobei die Dichtungsstruktur (27) zumindest partiell und einschließlich des ringförmigen Innendichtungsabschnittes (27b) an die radial beweglichen Krallenabschnitte (38) angeformt ist und die zwischen benachbarten Krallenabschnitten (38) vorhandenen Zwischenräume abdichtend überbrückt.

10. Anschlussvorrichtung nach Anspruch 9, **dadurch gekennzeichnet, dass** die Dichtungsstruktur (27) auch die Sicherungs-Widerhaken (48) umhüllt und im Bereich der Sicherungs-Widerhaken einen radial nach außen vorstehenden ringförmigen Dichtwulst des Außendichtungsabschnittes (27a) bildet, der ausgebildet ist, um unter Abdichtung in die am Innenumfang der Befestigungsöffnung (3) des Trägerbauteils (2) ausgebildete Befestigungsnut (13) einzugreifen.

11. Anschlussvorrichtung nach Anspruch 9 oder 10, **dadurch gekennzeichnet, dass** die Dichtungsstruktur (27) an die nach vorne weisende Außenfläche (57) der Krallenabschnitte (38) angeformt ist und zweckmäßigerweise eine den Krallenabschnitten (38) axial vorgelagerte Innendichtungslippe (33) bildet, die am Außenumfang der eingesteckten Fluidleitung (5) abdichtend anliegt.

12. Anschlussvorrichtung nach einem der Ansprüche 9 bis 11, **dadurch gekennzeichnet, dass** die Dichtungsstruktur (27) Bestandteil eines einstückigen gummielastischen Hüllkörpers (25) ist, der das Halteelement (24) zumindest partiell und zweckmäßigerweise zumindest annähernd vollständig umhüllt und der insbesondere unmittelbar bei seiner Herstellung durch Spritzgießen unter Abdichtung an das Halteelement (24) angeformt ist

13. Anschlussvorrichtung nach einem der Ansprüche 1 bis 12, **dadurch gekennzeichnet, dass** in der Haltemanschette (4) eine zum lösenden Betätigen der Krallenabschnitte (38) dienende Lösehülse (58) axial verschiebbar gelagert ist, die mit einem Betätigungsabschnitt (63) rückseitig aus der Haltemanschette (4) herausragt und/oder dass das Halteelement (24) einstückig aus federelastischem Metall hergestellt ist, insbesondere aus Edelstahl, wobei es insbesondere als Stanzbiegeteil gefertigt ist und/oder dass das Trägerbauteil (2) ein zu der Anschlussvorrichtung (1) gehörender Gehäusekörper ist, in dem ein mit der Befestigungsöffnung (3) kommunizierender Fluidkanal (8) ausgebildet ist.

## Claims

1. Connecting device for a fluid line (5), with a holding sleeve (4), which is designed to engage in a position of use with its front side (22) leading with a fixing opening (3) of a separate support component (2) and to be fixed in this fixing opening (3), and through which an insertion opening (26), into which a fluid line (5) to be connected can be inserted from the rear of the holding sleeve (4), passes axially, wherein the holding sleeve (4) has a holding element (24) of an annular structure, which has at its rear an annular head section (36), which encloses the insertion opening (26) and from which several holding arms (37) mutually spaced around the insertion opening (26) project axially towards the front, which holding arms (37) are capable of radial spring-elastic deformation relative to the head section (36) and each of which holding arms (37) terminates with a claw section (38), which extends towards the front at an angle while at the same time extending radially inwards and which is designed to apply pressure with its front edge (43) to the outer circumference (15) of the inserted fluid line (5) for retaining it, wherein each claw section (38) is located by its rear side (47) opposite the front edge (43) on a support section (44) - connected to the head section (36) - of the associated holding arm (37), **characterised in that** on the rear of at least some of the claw sections (38), there is integrally formed at least one securing barb (48), which extends towards the rear and at the same time radially outwards and which is provided to engage with a fixing groove (13) formed at the inner circumference (34) of the fixing opening (3) of the support component (2) while securing the holding sleeve (4) against being pulled out of the fixing opening (3), wherein at least one claw section (38) is wider at its rear side (47) than the adjoining front end region (45) of the support section (44) of the holding arm (37), and wherein at least one securing barb (48) is located at an edge region (55) of the claw section (38) which laterally projects in the circumferential direction (42) of the holding element (24) relative to the front end region (45) of the support section (44) and the at least one securing barb (48) laterally projects past the support section (44).

2. Connecting device according to claim 1, **characterised in that** each claw section (38) of the holding element (24) is provided with at least one securing barb (48).

3. Connecting device according to claim 1 or 2, **characterised in that** the securing barb (48) projects radially outwards, in particular with oblique orientation, relative to the front end region (45) of the support section (44) which adjoins the claw section (38).

4. Connecting device according to any of claims 1 to 3, **characterised in that** each claw section (38) is wider at its rear side (47) than the adjoining front end region (45) of the support section (44) of the holding arm (37).

5. Connecting device according to any of claims 1 to 4, **characterised in that** at least one and expediently each claw section (38) projects at its rear side (47) laterally on both sides with an edge region (55) each beyond the adjoining front end region (45) of the support section (44) and is provided in both edge regions (55) with a securing barb (48) each in such a way that the front end region (45) of the support section (44) is flanked by a securing barb (48) each on both sides.

6. Connecting device according to any of claims 1 to 5, **characterised in that** in at least one claw section (38) at least one securing barb (48) is represented by a material tongue (48a) bent out of the adjoining front end region (45) of the support section (44).

7. Connecting device according to any of claims 1 to 6, **characterised in that** each of the support sections (44) of the holding arms (37) has a front end region (45) merging into a claw section (38) and an axially opposite rear end region (46) merging into the annular head section (36), wherein they do not project farther radially inwards at any point of their length than at their front end regions (45).

8. Connecting device according to any of claims 1 to 7, **characterised in that** each of the support sections (44) of the holding arms (37) has a front sub-section (44a), which extends from the rear side (47) of the respectively associated claw section (38) purely axially towards the head section (36), and a rear sub-section (44b), which adjoins the front sub-section (44a) via a kink region (53), extends radially outwards at an angle and merges into the head section (36) via a bending region (54).

9. Connecting device according to any of claims 1 to 8, **characterised in that** the holding sleeve (4) is coaxially assigned a one-piece annular seal structure (27), which has an annular outer seal section (27a) provided to bear against the inner circumferential surface (34) of the fixing opening (3) of the support component (2) while forming a seal and an annular inner seal section (27b) enclosing the inserted fluid line (5) at its outer circumference (15) while forming a seal, wherein the seal structure (27) expediently belongs to the holding sleeve (4) and is represented by a rubber-elastic injection-moulded body formed integrally with the holding element (24) using adhesive force while forming a seal immediately during its production by injection moulding, wherein the seal structure (27) is at least partially and including the annular inner seal section (27b) formed integrally with the radially movable claw sections (38) and bridges the gaps between adjacent claw sections (38) while forming a seal.

10. Connecting device according to claim 9, **characterised in that** the seal structure (27) encases the securing barbs (48) as well and forms in the region of the securing barbs an annular sealing bead of the outer seal section (27a), which projects radially outwards and is designed to engage with the fixing groove (13) formed at the inner circumference of the fixing opening (3) of the support component (2) while forming a seal.

11. Connecting device according to claim 9 or 10, **characterised in that** the seal structure (27) is formed integrally with the front-facing outer surface (57) of the claw sections (38) and expediently forms an inner seal lip (33), which is located in front of the claw sections (38) and bears against the outer circumference of the inserted fluid line (5) while forming a seal.

12. Connecting device according to any of claims 9 to 11, **characterised in that** the seal structure (27) is a part of an one-piece rubber-elastic enveloping body (25), which encloses the holding element (24) at least partially and expediently almost completely and which in particular is formed integrally with the holding element (24) immediately during its production by injection moulding while forming a seal.

13. Connecting device according to any of claims 1 to 12, **characterised in that** in the holding sleeve (4) there is provided an axially movable release sleeve (58) for the releasing actuation of the claw sections (38), which release sleeve (58) projects from the rear of the holding sleeve (4) with an actuating section (63), and/or **in that** the holding element (24) is produced in one piece from a spring-elastic metal, in particular stainless steel, wherein it is produced as a stamped and bent part in particular, and/or **in that** the support component (2) is a housing body which belongs to the connecting device (1) and in which a fluid passage (8) communicating with the fixing opening (3) is formed.

## Revendications

1. Dispositif de raccord pour une conduite de fluide (5), avec un manchon de retenue (4), qui est réalisé pour venir en prise dans une position d'utilisation avec son côté avant (22) en premier dans une ouverture de fixation (3) d'une pièce de support (2) séparée et être fixé dans cette ouverture de fixation (3), et qui est traversé axialement par une ouverture d'insertion (26), dans laquelle une conduite de fluide (5) à raccorder peut être insérée depuis le côté arrière (23) du manchon de retenue (4), dans lequel le manchon de retenue (4) dispose d'un élément de retenue (24) à structure annulaire, qui présente côté arrière une section de tête annulaire (36) entourant l'ouverture d'insertion (26), de laquelle dépassent axialement vers l'avant plusieurs bras de retenue (37) répartis autour de l'ouverture d'insertion (26) à distance réciproque, qui sont déformables radialement à élasticité de ressort par rapport à la section de tête (36) et qui se terminent respectivement avec une section à griffe (38) dépassant en biais vers l'avant et en même temps radialement vers l'intérieur, qui est réalisée pour solliciter avec son bord avant (43) la périphérie extérieure (15) de la conduite de fluide (5) insérée pour la fixer, dans lequel chaque section à griffe (38) est agencée avec son côté arrière (47) opposé au bord avant (43) au niveau d'une section de support (44) du bras de retenue (37) associé reliée à la section de tête (36), **caractérisé en ce**
**qu'**au moins un barbillon de sécurité (48) dépassant vers l'arrière et en même temps radialement vers l'extérieur est formé d'un seul tenant côté arrière sur au moins quelques-unes des sections à griffe (38), qui est prévu pour venir en prise dans une rainure de fixation (13) réalisée au niveau de la périphérie intérieure (34) de l'ouverture de fixation (3) de la pièce de support (2) et ainsi bloquer le manchon de retenue (4) contre l'extraction de l'ouverture de fixation (3), dans lequel au moins une section à griffe (38) est plus large au niveau de son côté arrière (47) que la zone d'extrémité avant (45) se raccordant de la section de support (44) du bras de retenue (37) et dans lequel au moins un barbillon de sécurité (48) est agencé au niveau d'une zone de bord (55) de la section à griffe (38) faisant latéralement saillie par rapport à la zone d'extrémité avant (45) de la section de support (44) dans la direction périphérique (42) de l'élément de retenue (24) et dépasse latéralement devant la section de support (44).

2. Dispositif de raccord selon la revendication 1, **caractérisé en ce que** chaque section à griffe (38) de l'élément de retenue (24) est dotée d'au moins un barbillon de sécurité (48).

3. Dispositif de raccord selon la revendication 1 ou 2, **caractérisé en ce que** le barbillon de sécurité (48) fait saillie radialement vers l'extérieur, en particulier avec orientation oblique, par rapport à la zone d'extrémité avant (45) de la section de support (44) se raccordant à la section à griffe (38).

4. Dispositif de raccord selon l'une quelconque des revendications 1 à 3, **caractérisé en ce que** chaque section à griffe (38) est plus large au niveau de son côté arrière (47) que la zone d'extrémité avant (45) se raccordant de la section de support (44) du bras de retenue (37).

5. Dispositif de raccord selon l'une quelconque des revendications 1 à 4, **caractérisé en ce qu'**au moins une et de manière appropriée chaque section à griffe (38) fait saillie de la zone d'extrémité avant (45) se raccordant de la section de support (44) au niveau de son côté arrière (47) latéralement des deux côtés avec respectivement une zone de bord (55) et est dotée au niveau des deux zones de bord (55) de respectivement un barbillon de sécurité (48) de sorte que la zone d'extrémité avant (45) de la section de support (44) est flanquée des deux côtés de respectivement un barbillon de sécurité (48).

6. Dispositif de raccord selon l'une quelconque des revendications 1 à 5, **caractérisé en ce que** pour au moins une section à griffe (38), au moins un barbillon de sécurité (48) est formé par une languette de matière (48a) courbée hors de la zone d'extrémité avant (45) se raccordant de la section de support (44).

7. Dispositif de raccord selon l'une quelconque des revendications 1 à 6, **caractérisé en ce que** les sections de support (44) des bras de retenue (37) présentent respectivement une zone d'extrémité avant (45) se transformant en une section à griffe (38) et une zone d'extrémité arrière (46) axialement opposée, se transformant en la section de tête annulaire (36), dans lequel elles ne dépassent à aucun endroit de leur tracé longitudinal davantage radialement vers l'intérieur qu'au niveau de leurs zones d'extrémité avant (45).

8. Dispositif de raccord selon l'une quelconque des revendications 1 à 7, **caractérisé en ce que** les sections de support (44) des bras de retenue (37) présentent respectivement une zone partielle avant (44a) s'étendant à partir du côté arrière (47) de la section à griffe (38) respectivement associée purement axialement en direction de la section de tête (36) et une zone partielle arrière (44b) s'étendant en biais radialement vers l'extérieur, se raccordant à la zone partielle avant (44a) par le biais d'une zone de pli (53), qui se transforme en la section de tête (36) par le biais d'une zone de flexion (54).

9. Dispositif de raccord selon l'une quelconque des revendications 1 à 8, **caractérisé en ce que** le manchon de retenue (4) est associé coaxialement à une structure d'étanchéité annulaire (27) d'un seul tenant, qui présente une section d'étanchéité extérieure annulaire (27a) prévue pour l'appui étanche sur la surface périphérique intérieure (34) de l'ouverture de fixation (3) de la pièce de support (2) et une section d'étanchéité intérieure annulaire (27b) entourant de manière étanche la conduite de fluide (5) insérée au niveau de sa périphérie extérieure (15), dans lequel de manière appropriée, la structure d'étanchéité (27) fait partie du manchon de retenue (4) et est formée par un corps moulé par injection ayant l'élasticité du caoutchouc formé sur l'élément de retenue (24) par liaison de matière de manière étanche directement lors de sa fabrication par moulage par injection, dans lequel la structure d'étanchéité (27) est formée au moins partiellement et inclusivement de la section d'étanchéité intérieure annulaire (27b) sur les sections à griffe (38) radialement mobiles et enjambe de manière étanche les espaces intermédiaires présents entre des sections à griffe (38) adjacentes.

10. Dispositif de raccord selon la revendication 9, **caractérisé en ce que** la structure d'étanchéité (27) enveloppe également les barbillons de sécurité (48) et forme dans la zone des barbillons de sécurité, un bourrelet d'étanchéité annulaire faisant saillie radialement vers l'extérieur de la section d'étanchéité extérieure (27a), qui est réalisé pour venir en prise de manière étanche dans la rainure de fixation (13) réalisée au niveau de la périphérie intérieure de l'ouverture de fixation (3) de la pièce de support (2).

11. Dispositif de raccord selon la revendication 9 ou 10, **caractérisé en ce que** la structure d'étanchéité (27) est formée sur la surface extérieure (57) dirigée vers l'avant des sections à griffe (38) et forme de manière appropriée une lèvre d'étanchéité intérieure (33) logée axialement en amont des sections à griffe (38), qui s'appuie de manière étanche sur la périphérie extérieure de la conduite de fluide (5) insérée.

12. Dispositif de raccord selon l'une quelconque des revendications 9 à 11, **caractérisé en ce que** la structure d'étanchéité (27) fait partie intégrante d'un corps de gaine (25) d'un seul tenant ayant l'élasticité du caoutchouc, qui enveloppe au moins partiellement et de manière appropriée au moins à peu près entièrement l'élément de retenue (24) et qui est formé de manière étanche sur l'élément de retenue (24) en particulier directement lors de sa fabrication par moulage par injection.

13. Dispositif de raccord selon l'une quelconque des revendications 1 à 12, **caractérisé en ce qu'**une douille de desserrage (58) servant à l'actionnement de desserrage des sections à griffe (38) est logée de manière axialement coulissante dans le manchon de retenue (4), qui dépasse avec une section d'actionnement (63) côté arrière du manchon de retenue (4) et/ou que l'élément de retenue (24) est fabriqué d'un seul tenant en métal à élasticité de ressort, en particulier en acier inoxydable, dans lequel il est fabriqué en particulier en tant que pièce découpée et pliée et/ou que la pièce de support (2) est un corps de boîtier appartenant au dispositif de raccord (1), dans lequel un canal de fluide (8) communiquant avec l'ouverture de fixation (3) est réalisé.
